# EUROPEAN PATENT SPECIFICATION

(11) **EP 0 503 690 B1**
(45) Date of publication and mention of the grant of the patent: **18.10.1995**
(21) Application number: 92200045.0
(22) Date of filing: 09.01.1992
(51) Int. Cl.: B32B 27/08

(54) **Structure built up from more than one layer**
Aus mehr als einer Schicht hergestellte Struktur
Structure contruite à partir de plus d'une couche

(30) Priority: 12.03.1991 NL 9100440
(43) Date of publication of application: 16.09.1992
(73) Proprietor: GENERAL ELECTRIC COMPANY, Schenectady, NY 12345 (US)
(72) Inventor: Mooijman, Frank Robert, NL-4600 AC Bergen op Zoom (NL); Van der Meer, Roelof, NL-4600 AC Bergen op Zoom (NL)
(74) Representative: Grever, Frederik

(56) References cited:
- EP-A- 0 337 316
- US-A- 4 528 326

## Description

The invention relates to a structure or laminate built up from more than one layer. Such structures are known in the literature and are used in particular for those circumstances where there is a need for a combination of properties which cannot be combined in a synthetic resin or can be combined therein with difficulty only. To be considered in this connection is the combination of barrier properties with strength properties or weldability.

In the manufacture of such structures or laminates the problem usually presents itself that the bonding between the various layers is unsatisfactory. Therefore, a bonding layer is often incorporated in such a structure. Because the use of such a bonding layer is cumbersome and increases the cost, it is endeavoured to use materials in which this is not necessary.

EP-A- 0 337 316 describes resin laminates with at least one layer of syndiotatic polystyrene and one layer of another resin which may be a polyamide. Nothing is stated on the adhesion between the layers. It is recommended to use an adhesive layer.

It is the object of the present invention to provide structures or laminates which are based on polyamides and polyvinylaromatic compounds. The invention is based on the surprsiing recognition of the fact that the bonding of polyamides to polyvinylaromatic compounds can be obtained by incorporating functionalised polystyrene in the polyamide layer. The invention therefore relates to a structure which is built up from more than one layer and which comprises:
a. at least one layer built up from a polymer or copolymer of at least one vinylaromatic compound, and
b. at least one layer built up from a mixture of one or more polyamides and functionalised polymer or functionalised copolymer of at least one styrenic compound, chosen from styrene, a-methylstyrene and core-substituted styrene, and which also comprises units with reactive groups. Vinyltoluene is a suitable example of a core-substituted styrene.

It has been found surprisingly that, by incorporating a functionalised polymer or copolymer of a styrenic compound in polyamide, a mixture is obtained which in a laminate structure is capable of bonding excellently to a polyvinylaromatic compound.

It is particularly surprising that such a mixture, which is known per se, is capable of bonding so well, since polyamide itself and also a mixture of polyamide with polystyrene, does not show any bonding to polyvinylaromatic compounds. In this connection it is to be noted that mixtures of polyamide with high-impact modified functionalised polystyrene are known from United States Patent Specification 4,528,326.

The term functionalised polymer or copolymer of at least one styrenic compound is to be understood to mean in this connection polymers which comprise units derived from styrenic compounds and which also comprise units with reactive groups, for example, carboxyl groups, anhydride groups, carboxylate groups, hydroxyl groups, epoxy groups, amino groups, oxazoline groups, sulphonate groups or derivatives thereof, nitrile groups, carbonate groups or derivatives thereof, amide groups and imide groups.

The units with reactive groups may be incorporated in the functionalised polymer in various manners, for example, random copolymers, block copolymers or graft copolymers.

Suitable examples of such functionalised polymers are copolymers of one or more styrenic compounds with maleic acid anhydride or the rubber-modified embodiments of such copolymers. The copolymers of styrenic compounds, preferably styrene and a-methylstyrene with acrylic acid, methacrylic acid, acrylate and/or methacrylate, may also be used. Furthermore, polymers with hydroxyl groups are suitable. Examples thereof are the copolymers of styrenic compounds with hydroxyethyl methacrylate.

Styrenic compounds which are used according to the invention are styrene, a-methylstyrene, core-substituted styrene and/or vinyltoluene. Styrene and/or a-methylstyrene are/is to be preferred.

According to a preferred embodiment of the invention a copolymer of a vinylaromatic compound, more in particular styrene, and maleic acid anhydride is preferably used as a functionalised polymer in the polyamide layer of the structure. The quantity of copolymerised maleic acid anhydride in the mixture is preferably between 0.01 and 0.75% by weight, more in particular between 0.25 and 0.75% by weight, related to the weight of the mixture. This quantity may be controlled, for example, by the quantity of maleic acid anhydride incorporated in the copolymer. However, a copolymer may also be used which has too high a content of maleic acid anhydride which is then "diluted" with a quantity of polystyrene.

According to an embodiment of the invention the mixture which is used for the manufacture of layer b consists of:
1) 2 to 98 parts by weight of polyamide,
2) 2 to 98 parts by weight of functionalised polymer or functionalised copolymer of a styrenic compound,
3) 0 to 96 parts by weight of polyvinylaromatic compound.

More in particular the said layer consists of
1) 2 to 65 parts by weight of polyamide,
2) 2 to 35 parts by weight of functionalised polymer or functionalized copolymer of a styrenic compound,
3) 0 to 96 parts by weight, more in particular 10 to 96 parts by weight of polyvinylaromatic compound.

The choice of the type of polyamide is determined substantially by the requirements which are imposed on the laminate. A polyamide is preferably chosen from the group consisting of nylon-6, nylon-6,6, nylon-4,6, nylon-11 or nylon-12, amorphous nylon and mixtures of two or more thereof or mixtures with other synthetic resins.

The manufacture of the various components which may be used according to the invention is known to those skilled in the art. The mixture for layer b may also be obtained in known manner by mixing the polymers or copolymers to be used prior to the extrusion of the layer and/or layers. It is also possible to supply the components of layer b individually to the extruder for the manufacture of layer b, the mixture being formed in the extruder.

The structure of the laminate may be obtained in a manner generally known for such structures, for example, by lamination of separate layers obtained in separate steps, for example, by extrusion or compression, or by coextrusion or coinjection moulding of two or more layers. Any desired article may be manufactured from the structure according to the invention, for example, by cold or warm deformation, blow-moulding and the like.

The invention will now be described in more detail with reference to a few examples.

### EXAMPLE

Various mixtures were prepared consisting of a polyamide PA-6 = polyamide-6; PA-12 = polyamide-12; PA-6.6 = polyamide-6.6), a high-impact polystyrene (HIPS) having a rubber content of 10% by weight and a styrene-maleic acid anhydride copolymer (SMA) having maleic acid anhydride content of 9% by weight and a rubber content of 14% by weight. The quantities used (parts by weight) are recorded in the table hereinafter. The constituents were compounded in a double-blade extruder, extruded and pelletised.

Test plates having a dimension of approximately 12 x 18 cm and a thickness of approximately 2 mm were manufactured from the resulting pellets. For that purpose the pellets were compressed under a press at a pressure of 25 kN and a temperature of 250°C.

Test plates were manufactured in the same manner from a high-impact polystyrene (10% by weight of rubber).

Always one test plate from the high-impact polystyrene with one of the test plates from the polyamide-containing mixture was then compressed to a laminate under a pressure of 25 kN at 250°C.

The bonding between the two layers of the laminate was determined manually by trying to pull the layers apart. "Yes" means that the layers could not be pulled apart; "No" means that this was successful indeed.

**TABLE**

| Composition Mixture: | 1 | 2 | 3 | 4 | 5 | 6 | 7 | 8 | 9** | 10 |
|---|---|---|---|---|---|---|---|---|---|---|
| PA-6 | 50 | 50 | 50 | | | 40 | 30 | 20 | 50 | |
| PA-12 | | | | 55 | 50 | | | | | |
| PA-66 | | | | | | | | | | 90 |
| HIPS | 47.5 | 45 | 42.5 | 37.5 | 42.5 | 52.5 | 62.5 | 72.5 | 50 | |
| SMA | 2.5 | 5 | 7.5 | 7.5 | 7.5 | 7.5 | 7.5 | 7.5 | - | 10 |
| Bonding | yes | yes | yes | yes | yes | yes | yes | yes | no | yes* |

| | | | | | | | | | | |
|---|---|---|---|---|---|---|---|---|---|---|
| * The test plate manufactured from this mixture showed undesired inhomogeneity. After compressing the test plate from the high-impact polystyrene, a further non-acceptable demixing occurred. | | | | | | | | | | |
| ** In the examples mixture 9 is a comparative example. | | | | | | | | | | |

## Claims

1. A structure built up from more than one layer and comprising:
a. at least one layer built up from a polymer or copolymer of at least one vinylaromatic compound, and
b. at least one layer built up from a mixture of one or more polyamides and functionalised polymer or function alised copolymer of at least one styrenic compound, chosen from styrene, a-methylstyrene and core-substituted styrene,and which also comprises units with reactive groups.

2. A structure as claimed in Claim 1, wherein the layer based on a mixture of one or more polyamides and functionalised polymer or copolymer based on at least one styrenic compound (b) also comprises a polyvinylaromatic compound.

3. A structure as claimed in Claim 1 or 2, wherein the functionalised polymer or copolymer is a copolymer of a styrenic compound and maleic acid anhydride.

4. A structure as claimed in Claim 3, wherein the content of copolymerised maleic acid anhydride is between 0.01 and 0.75% by weight related to the weight of the mixture.

5. A structure as claimed in Claims 1-4, wherein the polymer of layer (a) is a polymer or copolymer of styrene, a-methylstyrene, core-substituted styrene and/or vinyltoluene.

6. A structure as claimed in Claim 2, wherein the polyvinylaromatic compound is a polymer or copolymer of styrene, a-methylstyrene, core-substituted styrene and/or vinyltoluene.

7. A structure as claimed in Claims 1-6, wherein the polyamide used is a nylon-6, nylon-4,6, nylon 6.6, nylon-11 or nylon-12, amorphous nylon, mixtures of two or more thereof or mixtures with another synthetic resin.

8. A structure as claimed in Claims 1-7, wherein the mixture b comprises
1) 2 to 98 parts by weight of polyamide,
2) 2 to 98 parts by weight of functionalised polymer or functionalised copolymer of a styrenic compound,
3) 0 to 96 parts by weight of polyvinylaromatic compound.

9. A structure as claimed in Claim 8, wherein the mixture b comprises
1) 2 to 65 parts by weight of polyamide,
2) 2 to 35 parts by weight of functionalised polymer or functionalised copolymer of a styrenic compound,
3) 10 to 96 parts by weight of polyvinylaromatic compound.

## Patentansprüche

1. Aus mehr als einer Schicht hergestellte Struktur enthaltend:
a. wenigstens eine Schicht, hergestellt aus einem Polymeren oder Copolymeren von Wenigstens einer vinylaromatischen Verbindung und
b. wenigstens eine Schicht, hergestellt aus einer Mischung aus einem oder mehreren Polyamiden und funktionalisiertem Polymeren oder funktionalisiertem Copolymeren wenigstens einer Styrolverbindung, ausgewählt aus Styrol, alpha-Methylstyrol und kernsubstituiertem Styrol und welche ebenfalls Einheiten mit reaktionsfähigen Gruppen umfassen.

2. Struktur nach Anspruch 1, worin die Schicht, die auf einer Mischung aus einem oder mehreren Polyamiden und funktionalisiertem Polymer oder Copolymer, auf wenigstens einer Styrolverbindung (b) basiert, ebenfalls eine vinylaromatische Verbindung umfaßt.

3. Struktur nach Anspruch 1 oder 2, worin das funktionalisierte Polymer oder Copolymer ein Copolymer einer Styrolverbindung und Maleinsäureanhydrid ist.

4. Struktur nach Anspruch 3, worin der Gehalt an copolymerisiertem Maleinsäureanhydrid zwischen 0,01 und 0,75 Gew.-%, bezogen auf das Gewicht der Mischung, liegt.

5. Struktur nach den Ansprüchen 1 bis 4, worin die Polymerschicht (a) ein Polymer oder Copolymer von Styrol, alpha-Methylstyrol, kernsubstituiertem Styrol und/oder Vinyltoluol ist.

6. Struktur nach Anspruch 2, worin die polyvinylaromatische Verbindung ein Polymer oder Copolymer von Styrol, alpha-Methylstyrol, kernsubstituiertem Styrol und/oder Vinyltoluol ist.

7. Struktur nach den Ansprüchen 1 bis 6, worin das verwendete Polyamid ein Nylon-6, Nylon-4,6, Nylon 6,6, Nylon-11 oder Nylon-12, amorphes Nylon, Mischungen aus zwei oder mehreren derselben oder Mischungen mit anderen synthetischen Harzen ist.

8. Struktur nach den Ansprüchen 1 bis 7, worin die Mischung b umfaßt:
1) 2 - 98 Gewichtsteile Polyamid,
2) 2 - 98 Gewichtsteile funktionalisiertes Polymer oder funktionalisiertes Copolymer einer Styrolverbindung,
3) 0 - 96 Gewichtsteile polyvinylaromatische Verbindung.

9. Struktur nach Anspruch 8, worin die Mischung b enthält:
1) 2 - 65 Gewichtsteile Polyamid,
2) 2 - 35 Gewichtsteile funktionalisiertes Polymer oder funktionalisiertes Copolymer einer Styrolverbindung,
3) 10 - 96 Gewichtsteile polyvinylaromatische Verbindung.

## Revendications

1. Structure constituée de plus d'une couche, et comprenant :
a) au moins une couche en un polymère ou un copolymère d'au moins un composé vinyl-aromatique, et
b) au moins une couche en un mélange d'un ou plusieurs polyamides et d'un polymère fonctionnalisé ou copolymère fonctionnalisé d'au moins un composé styrénique, choisi parmi le styrène, l'α-méthyl-styrène et un styrène à cycle portant un substituant, qui comporte aussi des motifs portant des groupes réactifs.

2. Structure conforme à la revendication 1, dans laquelle la couche (b), qui est à base d'un mélange d'un ou plusieurs polyamides et d'un polymère ou copolymère fonctionnalisé à base d'au moins un composé styrénique, contient également un composé de type poly(vinylaromatique).

3. Structure conforme à la revendication 1 ou 2, dans laquelle le polymère ou copolymère fonctionnalisé est un copolymère d'un composé styrénique et d'anhydride maléique.

4. Structure conforme à la revendication 3, dans laquelle la teneur en anhydride maléique copolymérisé vaut entre 0,01 et 0,75 % en poids, par rapport au poids du mélange.

5. Structure conforme à l'une des revendications 1 à 4, dans laquelle le polymère de la couche (a) est un polymère ou un copolymère du styrène, de l'α-méthyl-styrène, d'un styrène à cycle portant un substituant et/ou d'un vinyl-toluène.

6. Structure conforme à la revendication 2, dans laquelle le composé de type poly(vinyl-aromatique) est un polymère ou copolymère du styrène, de l'α-méthyl-styrène, d'un styrène à cycle portant un substituant et/ou d'un vinyl-toluène.

7. Structure conforme à l'une des revendications 1 à 6, dans laquelle le polyamide utilisé est un nylon 6, un nylon 4-6, un nylon 6-6, un nylon 11, un nylon 12, un nylon amorphe, un mélange de deux de ceux-ci ou plus, ou un de leurs mélanges avec une résine synthétique d'un autre type.

8. Structure conforme à l'une des revendications 1 à 7, dans laquelle le mélange de la couche (b) comporte
1) 2 à 98 parties en poids de polyamide,
2) 2 à 98 parties en poids de polymère fonctionnalisé ou copolymère fonctionnalisé d'un composé styrénique, et
3) 0 à 96 parties en poids d'un composé poly(vinyl-aromatique).

9. Structure conforme à la revendications 8, dans laquelle le mélange de la couche (b) comporte
1) 2 à 65 parties en poids de polyamide,
2) 2 à 35 parties en poids de polymère fonctionnalisé ou copolymère fonctionnalisé d'un composé styrénique, et
3) 10 à 96 parties en poids d'un composé poly(vinyl-aromatique).
